# EUROPÄISCHE PATENTANMELDUNG

(11) **EP 4 527 548 A1**
(43) Veröffentlichungstag der Anmeldung: **26.03.2025**
(21) Anmeldenummer: 24201145.0
(22) Anmeldetag: 18.09.2024
(51) Int. Cl.: B23Q 3/155, B23Q 3/157

(54) **WECHSLER FÜR WERKZEUGE ODER WERKSTÜCKE EINER WERKZEUGMASCHINE UND VERFAHREN ZUM BETRIEB EINES SOLCHEN WECHSLERS**

(30) Priorität: 25.09.2023 DE 102023125940
(71) Anmelder: Adelbert Haas GmbH, 78647 Trossingen (DE)
(72) Erfinder: Pasternak, Sergii, 78050 Villingen-Schwenningen (DE); Endres, Reinhard, 82380 Peißenberg (DE); Schnee, Gerhard, 78588 Denkingen (DE); Wember, Dirk, 78628 Rottweil (DE)
(74) Vertreter: Westphal, Mussgnug & Partner Patentanwälte mbB

(57) **Zusammenfassung**

Bereitgestellt werden ein Wechsler (100) für Werkzeuge (112, 122, 132, 142, 152, 162) oder Werkstücke einer Werkzeugmaschine, wobei der Wechsler (100) mehrere Aufnahmen (111, 121, 131, 141) für Werkzeuge (112, 122, 132, 142, 152, 162) oder Werkstücke aufweist, die um eine gemeinsame Drehachse (D) herum drehbar angeordnet sind, bei dem die Relativposition der Aufnahmen (111, 121, 131, 141) für Werkzeuge (112, 122, 132, 142, 152, 162) oder Werkstücke zueinander variabel ist, so dass der Abstand zwischen einer ersten Aufnahme (111, 121, 131, 141) für Werkzeuge (112, 122, 132, 142, 152, 162) oder Werkstücke und den zu dieser ersten Aufnahme (111, 121, 131, 141) für Werkzeuge (112, 122, 132, 142, 152, 162) oder Werkstücke benachbarten Aufnahmen (121, 131, 141, 111) für Werkzeuge (112, 122, 132, 142, 152, 162) oder Werkstücke sich an unterschiedlichen Positionen der ersten Aufnahme (111, 121, 131, 141) für Werkzeuge (112, 122, 132, 142, 152, 162) oder Werkstücke unterschiedlich ist und ein Verfahren zum Betrieb eines solchen Wechslers (100)

## Beschreibung

Die Erfindung betrifft einen Wechsler für Werkzeuge oder Werkstücke einer Werkzeugmaschine und Verfahren zum Betrieb eines solchen Wechslers.

Aus Zeit- und Kostengründen, aber auch aus Sicherheitsgründen wird in immer größerem Ausmaß angestrebt, dass eine Bearbeitung von Werkstücken mit den Werkzeugen einer Werkzeugmaschine weitestgehend automatisiert erfolgt. Moderne Werkzeugmaschinen weisen daher in vielen Fällen einen Wechsler für Werkzeuge oder Werkstücke auf, um zu ermöglichen, Werkzeuge oder Werkstücke ohne einen Eingriff in den Bearbeitungsraum der Werkzeugmaschine auszutauschen.

Bei einer gängigen Bauform derartiger Wechsler für Werkzeuge oder Werkstücke einer Werkzeugmaschine sind eine Mehrzahl von Aufnahmen für Werkzeuge oder Werkstücke vorgesehen, die jeweils in gleichem Abstand von einer gemeinsamen Drehachse auf einer Trägerstruktur, beispielsweise einer Scheibe, wie es in der EP 2 060 359 B1 offenbart ist, oder einem Kreuz, wie es in der DE 20 2023 102 829 U1 offenbart ist, angeordnet und starr miteinander verbunden sind.

Zum Austausch eines Werkzeugs oder Werkstücks wird
- das auszutauschende Werkzeug oder Werkstück in eine freie Aufnahme des Wechslers aufgenommen, beispielsweise mit einem Greifer ergriffen,
- seine Fixierung in der Werkzeug- oder Werkstückspindel aufgehoben und das Werkzeug oder Werkstück durch eine Bewegung parallel zur Achse der Werkzeug- oder Werkstückspindel von dieser abgezogen,
- die Aufnahmen der Trägerstruktur um die gemeinsame Drehachse herum bis zur Position des nächsten einzusetzenden Werkzeugs oder Werkstücks gedreht,
- das nächste Werkzeug oder Werkstück durch eine Bewegung parallel zur Achse der Werkzeug- oder Werkstückspindel in diese eingesetzt, dort fixiert und von der Aufnahme freigegeben, beispielsweise indem ein Greifer loslässt, und
- das Werkzeug oder Werkstück in die Bearbeitungsposition überführt.

Ein wesentlicher Parameter für die Erzielung hoher Bearbeitungsgeschwindigkeiten ist die Minimierung von Fahrwegen beim Betrieb der Werkzeugmaschine. Dies führt zu einem Dilemma bei der Gestaltung der Trägerstruktur für die Aufnahmen des Wechslers.

Wählt man eine Scheibe, wie in der EP 2 060 359 B1, ist es möglich, den Wechsler mit einer hohen Zahl von Aufnahmen zu versehen. Zwischen diesen Aufnahmen ist aber kein Platz, was dazu führt, dass eine große Relativbewegung zwischen Wechsler und Spindel ausgeführt werden muss, ehe mit der Bearbeitung begonnen werden kann, um zu verhindern, dass der Wechsler die Bearbeitung stört und ein Kollisionsrisiko mit der Spindel entsteht.

Wählt man eine kreuzförmige Struktur, kann man stattdessen die Fahrwege minimieren, wie z.B. in der DE 20 2023 102 829 U1 beschrieben wird, aber die Zahl der Werkzeuge, die auf dem Wechsler bereitgehalten werden können, ist geringer.

Dementsprechend besteht die Aufgabe der Erfindung darin, einen Wechsler für Werkzeuge oder Werkstücke einer Werkzeugmaschine und ein Verfahren zum Betrieb eines solchen Wechslers bereitzustellen, der kurze Fahrwege ermöglicht, Kollisionsrisiko mit der Spindel reduziert und zugleich mehr Werkzeug- oder Werkstückaufnahmen bereitstellt.

Diese Aufgabe wird gelöst durch einen Wechsler für Werkzeuge oder Werkstücke einer Werkzeugmaschine mit den Merkmalen des Patentanspruchs 1 und durch ein Verfahren zum Betrieb eines solchen Wechslers mit den Merkmalen des Patentanspruchs 7. Vorteilhafte Weiterbildungen der Erfindung sind Gegenstand der abhängigen Patentansprüche.

Der erfindungsgemäße Wechsler für Werkzeuge oder Werkstücke einer Werkzeugmaschine weist mehrerer Aufnahmen für Werkzeuge oder Werkstücke auf, die um eine gemeinsame Drehachse herum drehbar angeordnet sind, so dass bei der Ausführung einer Drehung um diese Achse herum alle Aufnahmen für Werkzeuge oder Werkstücke ihre Position ändern.

Dies setzt aber nicht voraus, dass die Positionsänderung aller Aufnahmen für Werkzeuge oder Werkstücke in gleicher Weise verändert wird, sondern erfordert lediglich, dass diese Positionsänderungen zumindest teilweise durch die Bewegung derselben angetriebenen Drehachse herbeigeführt werden. Mit anderen Worten gesagt bedeutet das Merkmal, dass die Aufnahmen für Werkzeuge oder Werkstücke um eine gemeinsame Drehachse herum drehbar angeordnet sind, also, dass bei einer Drehung um diese Drehachse alle Aufnahmen für Werkzeuge oder Werkstücke ihre Position im Raum ändern, wobei aber nicht zwingend alle Positionsänderungen allein durch diese Drehung hervorgerufen werden.

Erfindungswesentlich ist, dass die Relativposition der Aufnahmen für Werkzeuge oder Werkstücke zueinander variabel ist, so dass der Abstand zwischen einer ersten Aufnahme für Werkzeuge oder Werkstücke und den zu dieser ersten Aufnahme für Werkzeuge oder Werkstücke benachbarten Aufnahmen für Werkzeuge oder Werkstücke sich an unterschiedlichen Positionen der ersten Aufnahme für Werkzeuge oder Werkstücke unterschiedlich ist.

Grundsätzlich können solche Abstandsvariationen offensichtlich auf unterschiedliche Weise herbeigeführt werden; insbesondere durch Veränderung des Winkels zwischen den Verbindungslinien der jeweiligen Aufnahme für Werkzeuge oder Werkstücke zur gemeinsamen Drehachse von zwei benachbarten Aufnahmen für Werkzeuge oder Werkstücke oder durch eine Veränderung des Abstands jeweiliger Aufnahmen für Werkzeuge oder Werkstücke zu der gemeinsamen Drehachse.

Auf diese Weise wird die Möglichkeit geschaffen, bei einem an der Werkzeugmaschine angeordneten Wechsler Aufnahmen für Werkzeuge oder Werkstücke an der von der Werkzeug- oder Werkstückspindel abgewandten Seite des Wechslers dicht beieinander anzuordnen, so dass eine größere Zahl von Werkzeugen oder Werkstücken im Wechsler angeordnet werden können, während der Abstand einer Aufnahme für Werkzeuge oder Werkstücke von ihren Nachbarn insbesondere in der Position, in der sie ein Werkzeug oder Werkstück an die Werkzeug- oder Werkstückspindel übergibt bzw. von dieser übernimmt erhöht werden kann, so dass ausreichender Platz bei der Bearbeitung vorhanden ist und Fahrwege zur Vermeidung von Kollisionen vermieden werden können.

Grundsätzlich kann dies unter Einbeziehung von individuellen Antrieben für die einzelnen Aufnahmen für Werkzeuge oder Werkstücke realisiert werden; bevorzugt ist es aber, dass ein gemeinsamer Antrieb zum Herbeiführen der Drehungen der Aufnahmen für Werkzeuge oder Werkstücke um die gemeinsame Drehachse herum vorhanden ist, weil dadurch Kosten gespart werden und die Koordination der Bewegungen der Aufnahmen für Werkzeuge oder Werkstücke vereinfacht wird.

Als gemeinsamer Antrieb sind dabei insbesondere elektrische, hydraulische, pneumatische oder kombinierte Antriebe geeignet.

Eine erste bevorzugte Variante zur Realisierung der Variation der Relativpositionen der Aufnahmen für Werkzeuge oder Werkstücke zueinander besteht darin, dass der gemeinsame Antrieb die Aufnahmen für Werkzeuge oder Werkstücke über Kurvenscheiben oder eine Kurvenführung antreibt.

Bei einer dazu alternativen Variante wird die Relativposition der Aufnahmen für Werkzeuge oder Werkstücke zueinander dadurch variiert, dass der gemeinsame Antrieb die Aufnahmen für Werkzeuge oder Werkstücke über Planetengetriebe antreibt.

Besonders effektiv wird der durch die Möglichkeit, die Abstände zwischen den Aufnahmen für Werkzeuge oder Werkstücken zu variieren genutzt, wenn der Abstand zwischen einer gegebenen Aufnahme für Werkzeuge oder Werkstücke und den zu dieser gegebenen Aufgabe für Werkzeuge oder Werkstücke benachbarten Aufnahmen für Werkzeuge oder Werkstücke am größten ist, wenn sich die gegebene Aufnahme für Werkzeuge oder Werkstücke in der Position befindet, in der sie am nächsten zur Werkzeug- oder Werkstückspindel ist.

Bei dem erfindungsgemäßen Verfahren zum Betrieb eines solchen Wechslers für Werkzeuge oder Werkstücke einer Werkzeugmaschine, wird zum Wechseln eines auszutauschenden Werkzeugs oder Werkstücks das auszutauschende Werkzeug oder Werkstück, das sich gerade in der Werkzeug- oder Werkstückspindel befindet, in eine freie Aufnahme für Werkzeuge oder Werkstücke des Wechslers aufgenommen. Vorzugsweise ist dies die Aufnahme für Werkzeuge oder Werkstücke, aus der dieses Werkzeug oder Werkstück auch in die Spindel eingesetzt wurde und die während der Bearbeitung im Wesentlichen an der Übergabeposition geblieben ist. Bevorzugt ist die Aufnahme für Werkzeuge oder Werkstücke als ein Greifer gestaltet, so dass das Aufnehmen des Werkstücks oder Werkzeugs einfach durch Schließen des Greifers realisiert werden kann.

Ferner wird bei dem erfindungsgemäßen Verfahren die Fixierung des auszutauschenden Werkzeugs in der Werkzeug- oder Werkstückspindel aufgehoben und das Werkzeug oder Werkstück durch eine Bewegung parallel zur Achse der Werkzeug- oder Werkstückspindel von dieser abgezogen. Dies kann bevorzugt gemeinsam mit Kühlschmierstoffdüsen geschehen, die individuell auf das jeweilige Werkzeug abgestimmt und mit diesem verbunden sein können.

Um das neue Werkzeug oder Werkstück in die Übergabeposition zu überführen, werden insbesondere die Aufnahmen für Werkzeuge oder Werkstücke der Trägerstruktur um die gemeinsame Drehachse herum gedreht, so dass die Aufnahme für Werkzeuge oder Werkstücke, in der sich das neue, d.h. das als nächstes einzusetzende Werkzeug oder Werkstück befindet, auf der Drehachse der Werkzeug- oder Werkstückspindel liegt, und anschließend das als nächstes einzusetzende Werkzeug oder Werkstück durch eine Bewegung parallel zur Achse der Werkzeug- oder Werkstückspindel in die Werkzeug- oder Werkstückspindel eingesetzt, dort fixiert und von der Aufnahme für Werkzeuge oder Werkstücke, in der das als nächstes einzusetzende Werkzeug oder Werkstück aufgenommen ist freigegeben, beispielsweise losgelassen, wenn die Aufnahme als Greifer ausgeführt ist.

Erfindungsgemäß zeichnet sich das Verfahren dadurch aus, dass mindestens eine der Aufnahmen für Werkzeuge oder Werkstücke der Trägerstruktur beim Drehen der Aufnahmen für Werkzeuge oder Werkstücke der Trägerstruktur um die gemeinsame Drehachse herum um einen anderen Drehwinkel um die gemeinsame Drehachse herum gedreht wird als andere Aufnahmen für Werkzeuge oder Werkstücke der Trägerstruktur und/oder dass mindestens eine der Aufnahmen für Werkzeuge oder Werkstücke der Trägerstruktur beim Drehen der Aufnahmen für Werkzeuge oder Werkstücke der Trägerstruktur um die gemeinsame Drehachse herum ihren Abstand von der gemeinsamen Drehachse ändert.

Dies führt dazu, dass es möglich wird, den Abstand zwischen benachbarten Aufnahmen für Werkzeuge oder Werkstücke anzupassen, um an bestimmten Positionen, wo dies nicht stört, Werkzeuge oder Werkstücke eng beieinander anzuordnen, während an anderen Positionen dieselbe Aufnahme für Werkzeuge oder Werkstücke hinreichend weit von denselben benachbarten Aufnahmen für Werkzeuge oder Werkstücke beabstandet ist, um eine kollisionsfreie Bearbeitung des Werkzeugs oder Werkstücks möglich zu machen, ohne dass der Wechsler für Werkzeuge oder Werkstücke aus dem Weg gefahren werden muss.

Besonders bevorzugt ist es dabei, wenn die Aufnahme für Werkzeuge oder Werkstücke, die das zuvor verwendete Werkzeug oder das zuvor bearbeitete Werkstück aufnimmt und/oder die Aufnahme für Werkzeuge oder Werkstücke, die das als nächstes zu verwendende Werkzeug oder das als nächstes zu bearbeitende Werkstück aufnimmt, um einen größeren Drehwinkel um die gemeinsame Drehachse herum gedreht wird und/oder in einem größeren Abstand zur gemeinsamen Drehachse positioniert wird als andere Aufnahmen für Werkzeuge oder Werkstücke.

Die Erfindung wird nachfolgend anhand von Figuren, die Ausführungsbeispiele zeigen, näher erläutert. Es zeigt:
- Fig. 1:: Eine isometrische Ansicht einer Ausführungsbeispiels eines Wechslers;
- Fig. 2:: eine Seitenansicht des Wechslers aus Figur 1;
- Fig. 3:: eine erste Möglichkeit zur Realisierung von variablen Relativpositionen der Werkzeugaufnahmen zueinander; und
- Fig. 4:: eine zweite Möglichkeit zur Realisierung von variablen Relativpositionen der Werkzeugaufnahmen zueinander.

Soweit in Figuren dieselbe Ausführungsform der Erfindung dargestellt ist, werden jeweils dieselben Bezugszeichen verwendet. Allerdings sind zur Verbesserung der Übersichtlichkeit nicht alle Bezugszeichen in allen Figuren angetragen.

Der in den Figuren dargestellte Wechsler 100 ist als Wechsler für Werkzeuge konfiguriert. Er weist in diesem Beispiel eine Trägerstruktur mit 6 Armen 110, 120, 130, 140, 150, 160 auf, die um eine gemeinsame Drehachse D herum und relativ zueinander drehbar sind; grundsätzlich kann aber auch eine größere oder kleinere Anzahl von Armen (und damit von aufnehmbaren Werkzeugen oder Werkstücken) vorgesehen sein.

In einem Gehäuse 170 sind ein gemeinsamer Antrieb, der die Arme 110, 120 130, 140, 150, 160 positionsabhängig individuell bewegt und dessen Steuerung angeordnet. Planetengetriebe oder Kurvenscheiben, mit denen die positionsabhängige individuelle Bewegung realisiert wird, sind innerhalb des Getriebegehäuses 180 angeordnet und daher nicht sichtbar.

Dass die Bewegung der Arme 110, 120 130, 140, 150, 160 positionsabhängig ist bedeutet, dass eine gegebene Zahl von Drehungen der Welle des Antriebs einerseits einen gegebenen Arm 110, 120 130, 140, 150, 160 in Abhängigkeit von seiner aktuellen Position um einen unterschiedlichen Winkel weiterbewegt, was auch mit sich bringt, dass sich der jeweilige Arm 110, 120 130, 140, 150, 160 dann unterschiedlich schnell bewegt.

Dass die Bewegung der Arme 110, 120 130, 140, 150, 160 zudem individuell bedeutet, dass unterschiedliche Arme 110, 120, 130, 140, 150, 160 sich um unterschiedliche Winkel bewegen, wie unten noch an einem Beispiel näher erläutert wird.

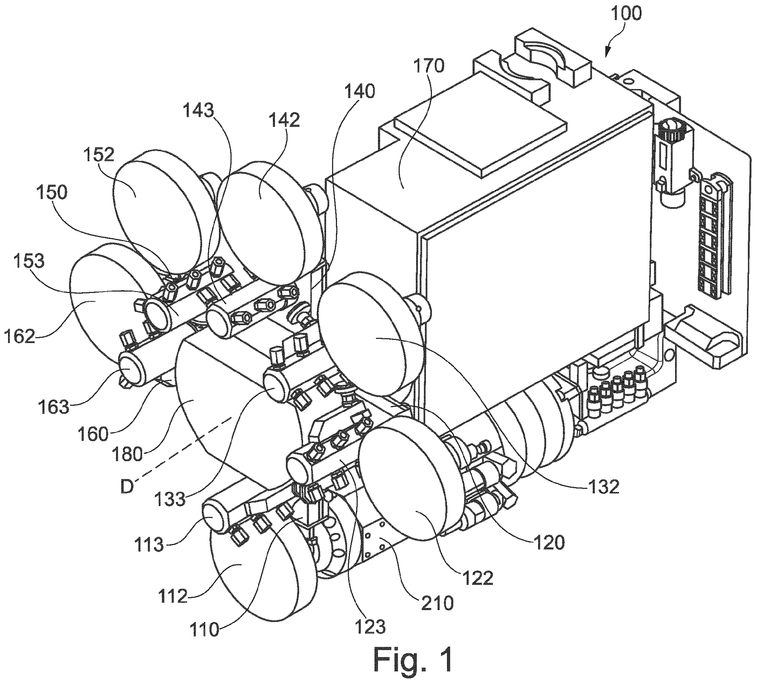

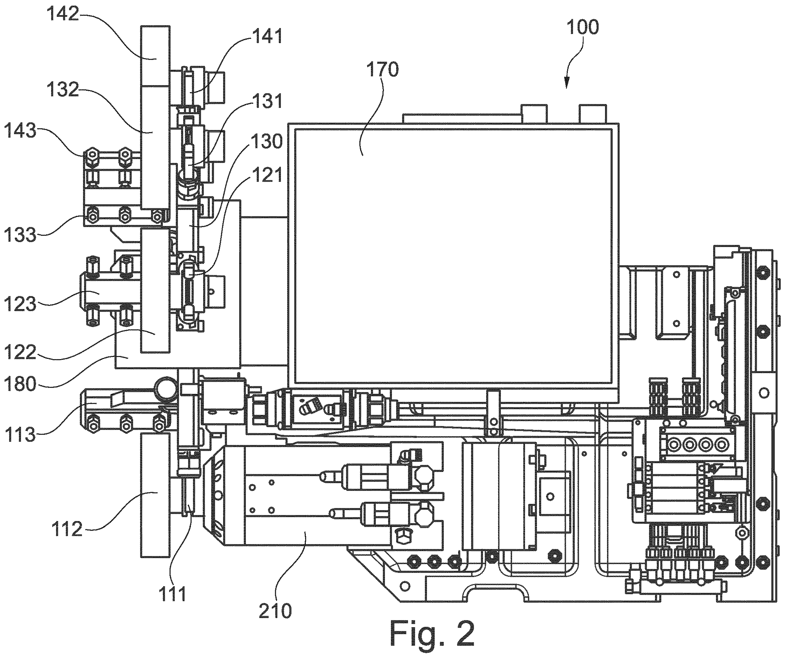

Am von der gemeinsamen Drehachse D entfernten Ende der Arme 110, 120, 130, 140, 150, 160 ist jeweils eine als Greifer ausgeführte Aufnahme für Werkzeuge oder Werkstücke angeordnet, die aber in Figur 1 durch die darin bzw. im Fall des Werkezugs 112 in der zur Werkzeugmaschine gehörenden Werkzeugspindel 190 aufgenommene Werkzeuge 112, 122, 132, 142, 152, 162 mit daran angeordneten zugehörigen Kühlschmierstoffdüsen 113, 123, 133, 143, 153, 163 verdeckt sind. Lediglich in Figur 2 sind die als Greifer ausgeführten Aufnahmen 111, 121, 131 und 141 zu erkennen, wobei der Greifer 111 gerade geöffnet ist, weil das Werkzeug 112 in die Werkzeugspindel 190 eingesetzt ist.

In der in Figur 1 gezeigten Position des Wechslers 100 erkennt man unmittelbar, dass es unterschiedliche Abstände zwischen benachbarten Werkzeugen gibt. Der Abstand zwischen dem Werkzeug 112 und dessen benachbarten Werkzeugen 122 und 162 ist jeweils 90°. Im Gegensatz dazu ist der Abstand zwischen dem Werkezuge 142 und den dazu benachbarten Werkzeugen 152 und 132 jeweils 45°.

Wenn das Werkzeug 112 nun ersetzt werden soll durch das Werkzeug 162, wird zunächst das auszutauschende Werkzeug 112 durch den Greifer, der die Aufnahme 111 bildet und der solange das auszutauschende Werkzeug 112 in der Werkzeugspindel 190 verwendet wurde frei war, ergriffen und dadurch in die bislang freie Aufnahme 111 aufgenommen. Nachdem die Fixierung des auszutauschenden Werkzeugs 112 in der Werkzeugspindel gelöst wurde, kann es durch eine Bewegung parallel zur Achse der Werkzeugspindel 190, die durch den Wechsler 100 oder durch ein lineares Verfahren der Werkzeugspindel 190 realisiert werde kann, von dieser abgezogen werden. Dabei kann auch gleichzeitig eine Verbindung zu einer Versorgungsleitung mit Kühlschmierstoff für die Kühlschmierstoffdüse 113 gelöst werden.

Anschließend werden alle Arme 110, 120, 130, 140, 150, 160 mit den daran angeordneten Aufnahmen 111,121,131,141 durch den Antrieb um die gemeinsame Drehachse D herum gedreht, so dass sie jeweils eine Position weitergefahren werden, damit die Aufnahme für Werkstücke oder Werkzeuge, die am Arm 160 angeordnet ist, das Werkzeug 162 an die Werkzeugspindel 190 übergeben kann.

Der Arm 160 muss dafür um 90 ° bewegt werden. Der Arm 110 wird ebenfalls um 90° bewegt, so dass er auf der Position landet, auf der in der Zeichnung der Arm 120 abgebildet ist; der Arm 120 muss um 45° auf die Position des Arms 130, der Arm 130 um 45° auf die Position des Arms 140, der Arm 140 um 45° auf die Position des Arms 150 und der Arm 150 um 45° auf die Position des Arms 160 bewegt werden.

Anschließend kann das nächste Werkzeug 162 durch eine Bewegung parallel zur Achse der Werkzeugspindel 190, die wie oben beim Herausziehen des Werkzeugs 112 beschrieben ausgeführt werden kann, in die Werkzeugspindel 190 eingesetzt, dort fixiert und von der als Greifer realisierten Aufnahme für Werkzeuge oder Werkzeuge, die das Werkzeug 162 bislang aufnahm, durch Öffnen des Greifers freigegeben werden. Dabei kann auch gleichzeitig eine Verbindung zu einer Versorgungsleitung mit Kühlschmierstoff für die Kühlschmierstoffdüse 163 hergestellt werden.

Offensichtlich sind die Aufnahmen, die die Werkzeuge 162 und 112 halten, dabei jeweils um einen Drehwinkel von 90° gedreht worden, die Aufnahmen, die die Werkzeuge 122, 132, 142 und 152 halten jedoch nur um 45°.

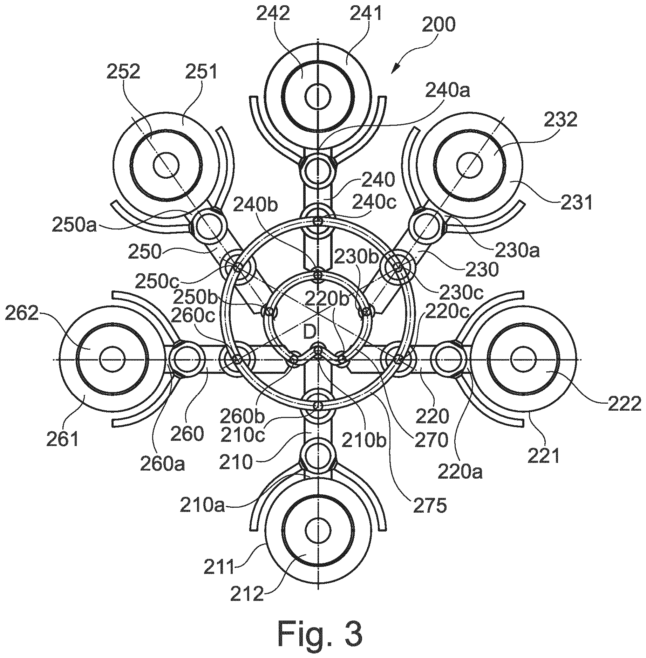

Anhand der Figur 3 wird nun eine erste Möglichkeit zur Realisierung von variablen Relativpositionen der Werkzeugaufnahmen zueinander erläutert. Der Wechsler 200, der in Figur 3 gezeigt ist, hat wieder sechs Arme 210,220,230,240,250,260, an deren distalen Enden 210a,220a,230a,240a,250a,260a jeweils eine Aufnahme 211,221,231,241,251,261 mit einem darin aufgenommenen Werkzeug 212,222,232,242,252,262 angeordnet ist.

Die den distalen Enden 210a,220a,230a,240a,250a,260a gegenüberliegenden proximalen Enden 210b,220b,230b,240b,250b,260b der Arme 210,220,230,240,250,260 sind in einer fest stehenden Kurvenscheibe 270 in Gestalt der Zwangskurve gelagert, die unrund gestaltet ist. Damit die Arme 210,220,230,240,250, 260 in der fest stehenden Zwangskurve ihre Position halten, werden sie vorzugsweise angepresst, um so die Führung durch die fest stehende Zwangskurve sicherzustellen.

Die Position der Arme 210,220,230,240,250,260 wird durch die Drehung eines Werkzeugwechslerrads 275 verändert, an dem die Arme 210,220,230,240,250,260 relativ zum Werkzeugwechslerrad 275 an einer Stelle 210c,220c,230c,240c,250c,260c zwischen ihrem distalen Ende 210a,220a,230a,240a,250a,260a und ihrem proximalen Ende 210b,220b,230b,240b,250b,260b jeweils um eine parallel zur Drehachse des Werkzeugwechslerrads 275 verlaufende Drehachse herum drehbar befestigt sind. Vorzugsweise sind die Stellen 210c,220c,230c,240c,250c,260c jeweils gleich weit vom proximalen Ende 210b,220b,230b,240b,250b,260b der Arme 210, 220,230,240,250,260 entfernt.

In Abhängigkeit von der unrunden Form der fest stehenden Kurvenscheibe 270 führen die Arme 210,220,230,240,250,260 bei der Drehung des Werkzeugwechslerrads 275 um seine Drehachse herum jeweils eine zusätzliche Drehung um die parallel zu dieser Drehachse durch die Stellen 210c,220c,230c,240c,250c,260c hindurch verlaufende Drehachse herum durch, die den Winkel zwischen den jeweiligen Armen 210,220,230,240,250,260 in Abhängigkeit von der Form der als Zwangskurve ausgeführten Kurvenscheibe 270 verändert, so dass der Abstand zwischen einer ersten Aufnahme 211,221,231,241, 251,261 und den zu dieser ersten Aufnahme 211,221,231,241,251, 261 benachbarten Aufnahmen 261,221; 211,231; 221,241; 231,251; 241,261;251,211 an den unterschiedlichen durch Drehung des Werkzeugwechslerrads 275 anfahrbaren Positionen der ersten Aufnahme 211,221,231,241,251,261 unterschiedlich ist.

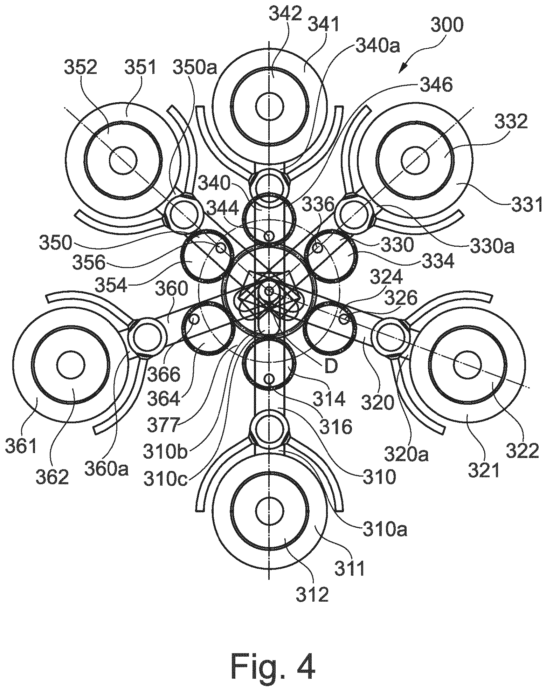

Anhand der Figur 4 wird nachfolgend eine zweite Möglichkeit zur Realisierung von variablen Relativpositionen der Werkzeugaufnahmen zueinander erläutert. Der Wechsler 300, der in Figur 4 gezeigt ist, hat wieder sechs Arme 310,320,330,340,350,360, an deren distalen Enden 310a,320a,330a,340a,350a,360a jeweils eine Aufnahme 311,321,331,341,351,361 mit einem darin aufgenommenen Werkzeug 312,322,332,342,352,362 angeordnet ist.

Die den distalen Enden 310a,320a,330a,340a,350a,360a der Arme 310,320,330,340,350,360 gegenüber liegenden proximalen Enden, von denen aus Gründen der Übersichtlichkeit nur das proximale Ende 310b des Arms 310 mit einem Bezugszeichen verseheben ist, weisen jeweils eine als Langloch ausgeführte -ebenfalls aus Gründen der Übersichtlichkeit nur beim Arm 310 mit einem Bezugszeichen versehene Aufnahme 310c auf, in der die gemeinsame Drehachse D geführt ist.

Die Änderung der relativen Position der sechs Arme 310,320, 330,340,350,360 wird hier durch eine Art Planetengetriebe bewirkt, dessen Sonnenrad 375 die gemeinsame Drehachse D als Drehachse hat. Sechs Planetenräder 314,324,334,344,354,364 sind in der Ausführungsform der Figur 4 mit ihren Drehachsen in einem gemeinsamen Ring 377 gelagert, der um die Drehachse D herum drehbar ist.

Die vom Sonnenrad 375 angetriebenen sechs Planetenräder 314,324,334,344,354,364, sind so dimensioniert, dass sie -gegebenenfalls auch unter Mitwirkung eines in Figur 4 nicht vorhandenen Zwischengetriebes- bei einer vollständigen Umrundung des Sonnenrads 375 jeweils einmal um 360° gedreht werden.

Dies führt dazu, dass der Abstand der im jeweiligen Planetenrad 314,324,334,344,354,364 verankerte Lagerstifte 316,326, 336,346,356,366, über die die Planetenräder 314,324,334,344, 354,364 jeweils mit einer zwischen den Enden des jeweiligen Arms 310,320,330,340, 350,360 liegenden Stelle verbunden sind, von der Drehachse D je nach der aktuellen Position des Planetenrads 310,320,330, 340,350, 360 variiert. In der Darstellung der Figur 4 wird der geringste Abstand eines Lagerstifts 316,326,336,346, 356,366 von der Drehachse D in einer 12 Uhr-Position erreicht, in der sich der am Lagerstift 346 befestigte Arm 340 gerade befindet, während der größte Abstand eines Lagerstifts 316,326,336,346, 356,366 in einer 6 Uhr-Position erreicht wird, in der sich der am Lagerstift 316 befestigte Arm 310 gerade befindet.

Dementsprechend sind die Arme 310,320,330,340,350,360 unterschiedlich weit ausgefahren, was dazu führt, dass der Abstand zwischen einer ersten Aufnahme 311,321,331,341,351,361 für Werkzeuge oder Werkstücke und den zu dieser ersten Aufnahme 311,321,331,341,351,361 für Werkzeuge oder Werkstücke benachbarten Aufnahmen 311,321,331,341,351,361 für Werkzeuge oder Werkstücke an unterschiedlichen Positionen der ersten Aufnahme 311,321,331,341,351,361 für Werkzeuge oder Werkstücke unterschiedlich ist und sich ändert, wenn durch Drehung des Sonnenrads 375 die Arme 310,320,330,340,350,360 um die gemeinsame Drehachse D herum gedreht werden.

### Bezugszeichenliste

| | |
|---|---|
| 100,200,300 | Wechsler |
| 110,120,130,140,150,160, 210,220,230,240,250,260, 310,320,330,340,350,360 | Arm |
| 111,121,131,141, 211,221,231,241,251,261, 311,321,331,341,351,361 | Aufnahme |
| 112,122,132,142,152,162, 212,222,232,242,252,262, 312,322,332,342,352,362 | Werkzeug |
| 113, 123, 133, 143, 153, 163 | Kühlschmierstoffdüse |
| 170 | Gehäuse |
| 180 | Getriebegehäuse |
| 190 | Werkzeugspindel |
| 210a, 220a, 230a, 240a, 250a, 260a,310a,320a,330a,340a, 350a,360a | distales Ende |
| 210b,220b,230b,240b,250b, 260b,310b | proximales Ende |
| 210c, 220c, 230c, 240c, 250c, 260c, | Stelle |
| 270 | Kurvenscheibe |
| 275 | Werkzeugwechslerrad |
| 310c | Aufnahme |
| 314,324,334,344,354,364 | Planetenrad |
| 316, 326, 336, 346, 356, 366 | Lagerstift |
| 375 | Sonnenrad |
| D | Drehachse |

## Patentansprüche

1. Wechsler (100, 200, 300) für Werkzeuge (112, 122, 132, 142, 152, 162, 212, 222, 232, 242, 252, 262, 312, 322, 332, 342, 352, 362) oder Werkstücke einer Werkzeugmaschine, wobei der Wechsler (100, 200, 300) mehrere Aufnahmen (111, 121, 131, 141, 211, 221, 231, 241, 251, 261, 311, 321, 331, 341, 351, 361) für Werkzeuge (112, 122, 132, 142, 152, 162, 212, 222, 232, 242, 252, 262, 312, 322, 332, 342, 352, 362) oder Werkstücke aufweist, die um eine gemeinsame Drehachse (D) herum drehbar angeordnet sind,
**dadurch gekennzeichnet, dass** die Relativposition der Aufnahmen (111, 121, 131, 141, 211, 221, 231, 241, 251, 261, 311, 321, 331, 341, 351, 361) für Werkzeuge (112, 122, 132, 142, 152, 162, 212, 222, 232, 242, 252, 262, 312, 322, 332, 342, 352, 362) oder Werkstücke zueinander variabel ist, so dass der Abstand zwischen einer ersten Aufnahme (111, 121, 131, 141, 211, 221, 231, 241, 251, 261, 311, 321, 331, 341, 351, 361) für Werkzeuge (112, 122, 132, 142, 152, 162, 212, 222, 232, 242, 252, 262, 312, 322, 332, 342, 352, 362) oder Werkstücke und den zu dieser ersten Aufnahme (111, 121, 131, 141, 211, 221, 231, 241, 251, 261, 311, 321, 331, 341, 351, 361) für Werkzeuge (112, 122, 132, 142, 152, 162, 212, 222, 232, 242, 252, 262, 312, 322, 332, 342, 352, 362) oder Werkstücke benachbarten Aufnahmen (121, 131, 141, 111, 211, 221, 231, 241, 251, 261, 311, 321, 331, 341, 351, 361) für Werkzeuge (112, 122, 132, 142, 152, 162, 212, 222, 232, 242, 252, 262, 312, 322, 332, 342, 352, 362) oder Werkstücke an unterschiedlichen Positionen der ersten Aufnahme (111, 121, 131, 141, 211, 221, 231, 241, 251, 261, 311, 321, 331, 341, 351, 361) für Werkzeuge (112, 122, 132, 142, 152, 162, 212, 222, 232, 242, 252, 262, 312, 322, 332, 342, 352, 362) oder Werkstücke unterschiedlich ist.

2. Wechsler (100, 200, 300) nach Anspruch 1,
**dadurch gekennzeichnet, dass** ein gemeinsamer Antrieb zum Herbeiführen der Drehungen der Aufnahmen (111, 121, 131, 141, 211, 221, 231, 241, 251, 261, 311, 321, 331, 341, 351, 361) für Werkzeuge (112, 122, 132, 142, 152, 162, 212, 222, 232, 242, 252, 262, 312, 322, 332, 342, 352, 362) oder Werkstücke um die gemeinsame Drehachse (D) herum vorhanden ist.

3. Wechsler (100,200,300) nach Anspruch 2,
**dadurch gekennzeichnet, dass** der gemeinsame Antrieb ein elektrischer, hydraulischer, pneumatischer oder kombinierter Antrieb ist.

4. Wechsler (100, 200, 300) nach Anspruch 2 oder 3,
**dadurch gekennzeichnet, dass** die Relativposition der Aufnahmen (111, 121, 131, 141, 211, 221, 231, 241, 251, 261, 311, 321, 331, 341, 351, 361) für Werkzeuge (112, 122, 132, 142, 152, 162, 212, 222, 232, 242, 252, 262, 312, 322, 332, 342, 352, 362) oder Werkstücke zueinander dadurch variiert wird, dass der gemeinsame Antrieb die Aufnahmen (111, 121, 131, 141, 211, 221, 231, 241, 251, 261, 311, 321, 331, 341, 351, 361) für Werkzeuge (112, 122, 132, 142, 152, 162) oder Werkstücke unter Verwendung von mindestens einer Kurvenscheibe (270) oder mindestens einer Kurvenführung antreibt.

5. Wechsler (100, 200, 300) nach Anspruch 2 oder 3,
**dadurch gekennzeichnet, dass** die Relativposition der Aufnahmen (111, 121, 131, 141, 211, 221, 231, 241, 251, 261, 311, 321, 331, 341, 351, 361) für Werkzeuge (112, 122, 132, 142, 152, 162, 212, 222, 232, 242, 252, 262, 312, 322, 332, 342, 352, 362) oder Werkstücke zueinander dadurch variiert wird, dass der gemeinsame Antrieb die Aufnahmen (111, 121, 131, 141, 211, 221, 231, 241, 251, 261, 311, 321, 331, 341, 351, 361) für Werkzeuge (112, 122, 132, 142, 152, 162, 212, 222, 232, 242, 252, 262, 312, 322, 332, 342, 352, 362) oder Werkstücke über mindestens ein Planetengetriebe antreibt.

6. Wechsler (100, 200, 300) nach einem der Ansprüche 1 bis 5, **dadurch gekennzeichnet, dass** der Abstand zwischen einer gegebenen Aufnahme (111, 121, 131, 141, 211, 221, 231, 241, 251, 261, 311, 321, 331, 341, 351, 361) für Werkzeuge (112, 122, 132, 142, 152, 162, 212, 222, 232, 242, 252, 262, 312, 322, 332, 342, 352, 362) oder Werkstücke und den zu dieser gegebenen Aufnahme (111, 121, 131, 141, 211, 221, 231, 241, 251, 261, 311, 321, 331, 341, 351, 361) für Werkzeuge (112, 122, 132, 142, 152, 162, 212, 222, 232, 242, 252, 262, 312, 322, 332, 342, 352, 362) oder Werkstücke benachbarten Aufnahmen (121, 131, 141, 111) für Werkzeuge (112, 122, 132, 142, 152, 162, 212, 222, 232, 242, 252, 262, 312, 322, 332, 342, 352, 362) oder Werkstücke am größten ist, wenn sich die gegebene Aufnahme (111, 121, 131, 141, 211, 221, 231, 241, 251, 261, 311, 321, 331, 341, 351, 361) für Werkzeuge (112, 122, 132, 142, 152, 162, 212, 222, 232, 242, 252, 262, 312, 322, 332, 342, 352, 362) oder Werkstücke in der Position befindet, in der sie am nächsten zur Werkzeugspindel 190 oder zur Werkstückspindel ist.

7. Verfahren zum Betrieb eines Wechslers (100, 200, 300) für Werkzeuge (112, 122, 132, 142, 152, 162, 212, 222, 232, 242, 252, 262, 312, 322, 332, 342, 352, 362) oder Werkstücke einer Werkzeugmaschine, bei dem zum Wechseln eines auszutauschenden Werkzeugs (112, 122, 132, 142, 152, 162) oder Werkstücks
∘ das auszutauschende Werkzeug (112, 122, 132, 142, 152, 162, 212, 222, 232, 242, 252, 262, 312, 322, 332, 342, 352, 362) oder Werkstück in eine freie Aufnahme (111, 121, 131, 141, 211, 221, 231, 241, 251, 261, 311, 321, 331, 341, 351, 361) für Werkzeuge (112, 122, 132, 142, 152, 162, 212, 222, 232, 242, 252, 262, 312, 322, 332, 342, 352, 362) oder Werkstücke des Wechslers (100, 200, 300) aufgenommen wird,
∘ die Fixierung des auszutauschenden Werkzeugs (112, 122, 132, 142, 152, 162, 212, 222, 232, 242, 252, 262, 312, 322, 332, 342, 352, 362) in der Werkzeugspindel (190) oder Werkstückspindel aufgehoben und das Werkzeug (112, 122, 132, 142, 152, 162, 212, 222, 232, 242, 252, 262, 312, 322, 332, 342, 352, 362) oder Werkstück durch eine Bewegung parallel zur Achse der Werkzeugspindel (190) oder Werkstückspindel von dieser abgezogen wird,
∘ die Aufnahmen (111, 121, 131, 141, 211, 221, 231, 241, 251, 261, 311, 321, 331, 341, 351, 361) der Trägerstruktur um die gemeinsame Drehachse (D) herum gedreht werden, so dass die Aufnahme (111, 121, 131, 141, 211, 221, 231, 241, 251, 261, 311, 321, 331, 341, 351, 361) für Werkzeuge (112, 122, 132, 142, 152, 162) oder Werkstücke, in der sich das als nächstes einzusetzende Werkzeug (112, 122, 132, 142, 152, 162, 212, 222, 232, 242, 252, 262, 312, 322, 332, 342, 352, 362) oder Werkstück befindet, auf der Drehachse der Werkzeugspindel (190) oder Werkstückspindel liegt, und
∘ dass das nächste Werkzeug (112, 122, 132, 142, 152, 162, 212, 222, 232, 242, 252, 262, 312, 322, 332, 342, 352, 362) oder Werkstück durch eine Bewegung parallel zur Achse der Werkzeugspindel (190) oder Werkstückspindel in die Werkzeugspindel (190) oder Werkstückspindel eingesetzt, dort fixiert und von der Aufnahme (111, 121, 131, 141, 211, 221, 231, 241, 251, 261, 311, 321, 331, 341, 351, 361) für Werkzeuge (112, 122, 132, 142, 152, 162, 212, 222, 232, 242, 252, 262, 312, 322, 332, 342, 352, 362) oder Werkstücke freigegeben wird,
**dadurch gekennzeichnet, dass** mindestens eine der Aufnahmen (111, 121, 131, 141, 211, 221, 231, 241, 251, 261, 311, 321, 331, 341, 351, 361) für Werkzeuge (112, 122, 132, 142, 152, 162, 212, 222, 232, 242, 252, 262, 312, 322, 332, 342, 352, 362) oder Werkstücke der Trägerstruktur beim Drehen der Aufnahmen (111, 121, 131, 141, 211, 221, 231, 241, 251, 261, 311, 321, 331, 341, 351, 361) für Werkzeuge (112, 122, 132, 142, 152, 162, 212, 222, 232, 242, 252, 262, 312, 322, 332, 342, 352, 362) oder Werkstücke der Trägerstruktur um die gemeinsame Drehachse (D) herum um einen anderen Drehwinkel um die gemeinsame Drehachse (D) herum gedreht wird als andere Aufnahmen (111, 121, 131, 141, 211, 221, 231, 241, 251, 261, 311, 321, 331, 341, 351, 361) für Werkzeuge (112, 122, 132, 142, 152, 162, 212, 222, 232, 242, 252, 262, 312, 322, 332, 342, 352, 362) oder Werkstücke der Trägerstruktur und/oder dass mindestens eine der Aufnahmen (111, 121, 131, 141, 211, 221, 231, 241, 251, 261, 311, 321, 331, 341, 351, 361) für Werkzeuge (112, 122, 132, 142, 152, 162, 212, 222, 232, 242, 252, 262, 312, 322, 332, 342, 352, 362) oder Werkstücke der Trägerstruktur beim Drehen der Aufnahmen (111, 121, 131, 141, 211, 221, 231, 241, 251, 261, 311, 321, 331, 341, 351, 361) für Werkzeuge (112, 122, 132, 142, 152, 162, 212, 222, 232, 242, 252, 262, 312, 322, 332, 342, 352, 362) oder Werkstücke der Trägerstruktur um die gemeinsame Drehachse (D) herum ihren Abstand von der gemeinsamen Drehachse (D) ändert.

8. Verfahren nach Anspruch 7,
**dadurch gekennzeichnet, dass** die Aufnahme (111, 121, 131, 141, 211, 221, 231, 241, 251, 261, 311, 321, 331, 341, 351, 361) für Werkzeuge (112, 122, 132, 142, 152, 162, 212, 222, 232, 242, 252, 262, 312, 322, 332, 342, 352, 362) oder Werkstücke, die das zuvor verwendete Werkzeug (112, 122, 132, 142, 152, 162, 212, 222, 232, 242, 252, 262, 312, 322, 332, 342, 352, 362) oder das zuvor bearbeitete Werkstück aufnimmt und/oder die Aufnahme (111, 121, 131, 141, 211, 221, 231, 241, 251, 261, 311, 321, 331, 341, 351, 361) für Werkzeuge (112, 122, 132, 142, 152, 162, 212, 222, 232, 242, 252, 262, 312, 322, 332, 342, 352, 362) oder Werkstücke, die das als nächstes zu verwendende Werkzeug (112, 122, 132, 142, 152, 162, 212, 222, 232, 242, 252, 262, 312, 322, 332, 342, 352, 362)oder das als nächstes zu bearbeitende Werkstück aufnimmt, um einen größeren Drehwinkel um die gemeinsame Drehachse (D) herum gedreht wird und/oder in einem größeren Abstand zur gemeinsamen Drehachse (D) positioniert wird als andere Aufnahmen (111, 121, 131, 141, 211, 221, 231, 241, 251, 261, 311, 321, 331, 341, 351, 361) für Werkzeuge (112, 122, 132, 142, 152, 162, 212, 222, 232, 242, 252, 262, 312, 322, 332, 342, 352, 362) oder Werkstücke.
